Europäisches Patentamt

European Patent Office

Office européen des brevets

(19)

(11) Numéro de publication : **0 058 941**
**B1**

(12)

# FASCICULE DE BREVET EUROPÉEN

(45) Date de publication du fascicule du brevet :
19.12.84

(51) Int. Cl.³ : **C 04 B 35/56**

(21) Numéro de dépôt : **82101212.7**

(22) Date de dépôt : **18.02.82**

(54) **Procédé de fabrication de pièces en carbure de silicium dense.**

(30) Priorité : **24.02.81 FR 8103589**

(43) Date de publication de la demande :
**01.09.82 Bulletin 82/35**

(45) Mention de la délivrance du brevet :
**19.12.84 Bulletin 84/51**

(84) Etats contractants désignés :
**BE DE FR GB IT NL**

(56) Documents cités :
**EP-A- 0 004 031**
**DE-A- 2 912 443**
**FR-A- 1 422 049**
**FR-A- 2 432 004**
**FR-A- 2 467 831**
**GB-A- 952 553**
**CHEMICAL ABSTRACTS, vol. 94, no. 8, 23 février
1981, page 290, résumé no. 51812q, Columbus, Ohio
(US), & JP-A-80 85 470 (HITACHI LTD.) (27 juin
1980)**

(73) Titulaire : **CERAVER Société anonyme dite:**
**12, rue de la Baume**
**F-75008 Paris (FR)**

(72) Inventeur : **Minjolle, Louis**
**10, rue Jeanne d''Albret**
**F-65000 Tarbes (FR)**
Inventeur : **Chateigner, Serge**
**28, rue de Lacassagne**
**F-65140 Rabastens de Bigorre (FR)**
Inventeur : **Calvet, Joseph**
**Résidence Beau Soleil Esc. E**
**F-65000 Tarbes (FR)**

(74) Mandataire : **Weinmiller, Jürgen et al**
**Zeppelinstrasse 63**
**D-8000 München 80 (DE)**

Jouve, 18, rue St-Denis, 75001 Paris, France

## Description

La présente invention concerne un procédé de fabrication de pièces en carbure de silicium dense par frittage sans pression, dans lequel :

a) on soumet une poudre de carbure de silicium, au moins en majeure partie de la forme cristalline alpha, de surface spécifique au moins égale à 2 m²/g, à un traitement thermique sous vide de purification à une température supérieure à 1 200 °C,

b) on mélange la poudre purifiée à un nitrure contenant de l'aluminium, ainsi qu'à du bore ou un composé contenant du bore, en quantité correspondant à moins de 0,15 % en poids de bore, rapportés au poids de carbure de silicium, le nitrure et le bore ou le composé contenant du bore étant également à l'état pulvérulent,

c) on met en suspension le mélange pulvérulent dans un solvant organique volatil, et le soumet à un broyage,

d) on élimine les impuretés métalliques provenant du broyeur par un traitement par un acide dilué,

e) on ajoute au mélange pulvérulent une matière organique carbonisable susceptible de former par sa carbonisation pendant le frittage de 0,2 à 4 % en poids de carbone amorphe, rapportés au poids de carbure de silicium,

f) on forme une pièce moulée à partir du mélange pulvérulent et de la matière organique carbonisable,

g) on soumet la pièce moulée au frittage sous atmosphère neutre à une température comprise entre 1 900° et 2 250 °C.

On connaît déjà par le document DE-A 2912443 un procédé de fabrication de pièces en carbure de silicium dense par frittage sans pression, à partir de poudre de carbure de silicium des formes cristallines alpha ou beta, additionnée d'un composé contenant de l'aluminium, notamment de nitrure d'aluminium, en quantité correspondant à 0 à 4 % en poids d'aluminium, d'une matière organique carbonisable, en proportion susceptible de fournir de 0,4 à 6 % en poids de carbone, et éventuellement de bore ou d'un composé contenant du bore, en quantité correspondant à 0,15 % au plus en poids de bore. Le mélange pulvérulent est mis en forme par pressage, coulée en barbotine, ou injection, après addition d'un liant, puis fritté à une température comprise entre 1 850° et 2 100 °C.

Les pièces obtenues présentent un grand intérêt comme éléments d'appareils soumis à des températures élevées en atmosphère oxydante, tels que des turbines à gaz ou des moteurs Diesel, en raison de leur grande résistance à la corrosion à chaud.

Il est toutefois nécessaire au cours de la préparation du mélange de broyer le mélange des poudres minérales pour lui donner la finesse requise pour qu'il se mélange de façon bien homogène à la matière organique carbonisable, puis se fritte en un matériau de densité suffisante.

Or le broyage introduit dans le mélange des particules du métal du matériau de broyage, par exemple des billes d'acier, et des parois du broyeur. Ce métal est nocif pour la résistance à la corrosion à chaud des pièces frittées. On peut l'éliminer par traitement en suspension par un acide dilué, tel que l'acide chlorhydrique. Mais celui-ci attaque la grande majorité des composés contenant de l'aluminium, notamment le nitrure d'aluminium, de sorte que seule une partie du composé contenant de l'aluminium subsiste dans le mélange soumis au frittage et que l'on ne peut introduire ce composé dans la proportion optimale dans le mélange.

La présente invention a pour but de remédier à l'inconvénient ci-dessus, et de procurer un procédé de fabrication de pièces en carbure de silicium dense par frittage sans pression, dans lequel on évite toute pollution du mélange soumis au frittage par du métal provenant du broyeur du mélange minéral, et dans lequel on peut ajuster la proportion de composé contenant de l'aluminium à la valeur optimale.

Le procédé selon l'invention est caractérisé en ce que le nitrure contenant de l'aluminium est le produit obtenu par nitruration d'un mélange de poudres de silicium et d'aluminium.

Il répond en outre de préférence à au moins l'une des caractéristiques suivantes :

— La quantité de nitrure contenant de l'aluminium est d'environ 0,5 % à 5 % en poids, rapportés au poids de carbure de silicium.

— La quantité de bore est inférieure à 0,03 % en poids.

— On forme la pièce moulée par pressage dans une matrice sous pression élevée, par pressage isostatique ou par coulée en barbotine ou par électrophorèse.

— On forme la pièce moulée par injection, par filage ou par pressage thermoplastique, après addition d'un liant, d'un plastifiant et d'un lubrifiant.

— La température de frittage est d'environ 2 100 °C.

Il est décrit ci-après à titre d'exemple un procédé de fabrication de pièces en carbure de silicium dense par frittage sans pression selon l'invention.

On utilise une poudre commerciale de carbure de silicium obtenue par le procédé Acheson, et consistant en la variété cristalline alpha sensiblement pure. Cette poudre a une surface spécifique de 7 m²/g environ. Elle peut contenir des impuretés formées principalement d'oxygène — (combiné dans la silice) jusqu'à 4 000 ppm, de silicium et de métaux jusqu'à environ 3 000 ppm.

La poudre est disposée en vue de sa purification dans un creuset en carbone dans un four à résistance de graphite, relié à une pompe à vide. On met le four sous un vide d'environ 1 millibar, puis élève la température du four jusqu'à une valeur de 1 200° à 1 600 °C. On maintient cette température pendant une durée de 5 minutes à 6 heures, cette durée dépendant de la quantité d'impuretés et variant en sens inverse de la température maximale. Pour une poudre suffisamment pure, un traitement thermique de cinq minutes à 1 600° peut suffire.

Après le traitement thermique, la surface spécifique de la poudre n'est plus que de 2 m²/g environ, et sa quantité d'oxygène d'environ 500 ppm. On lui ajoute 2 % en poids de poudre de nitrure de silicium et d'aluminium, à 6 à 200 % en poids d'aluminium par rapport au silicium, et de préférence à 1 ou 2 parties en poids d'aluminium par partie de silicium. On ajoute encore environ 0,1 % en poids de bore cristallisé pulvérulent, ou même moins, par exemple 0,025 % en poids. On disperse alors le mélange dans un solvant organique volatil tel que l'essence minérale ou le cyclohexane.

On broie la suspension dans un broyeur à billes d'acier. Par exemple, pour une suspension de 30 g de mélange précédent de carbure de silicium et de bore dans 140 cm³ de cyclohexane, le broyeur contient 1,6 kg de billes de diamètre 3 mm, en rotation à une vitesse de 300 tours/minute. On poursuit le broyage pendant 4 heures.

Pour éliminer le fer provenant des billes et des parois du broyeur, on sèche la poudre, puis la disperse dans une solution diluée d'acide chlorhydrique jusqu'à disparition de la présence d'ions du fer. On termine par un lavage à l'eau distillée acidulée, puis décante et sèche la suspension à l'étuve.

La poudre obtenue, de surface spécifique voisine de 9 m²/g, est mise en suspension dans de l'éthanol ou de l'eau, puis on ajoute à la suspension une laque phénolique dont l'extrait sec donne 60 % de carbone à la pyrolyse, par exemple une résine phénolique. La suspension est introduite dans une jarre en matière plastique contenant des billes de carbure de silicium ou un agitateur, puis la jarre est mise en rotation pendant une heure afin d'homogénéiser la suspension.

On sèche la suspension dans un évaporateur, puis tamise la poudre obtenue.

On met en forme la pièce à fabriquer, par exemple par pressage dans une matrice sous une pression de 2 000 bars, par pressage uniaxial ou isostatique sous une pression de 0,5 à 4 tonnes/cm², ou par coulée dans un moule en plâtre d'une barbotine formée d'une suspension de la poudre dans de l'eau, additionnée d'un agent défloculant.

On peut aussi mettre en forme les pièces par injection, par filage ou par pressage thermoplastique, en ajoutant à la poudre un liant organique, tel que le polystyrène, un plastifiant tel que du phtalate de dibutyle, et un lubrifiant tel qu'une cire microcristalline. La pièce moulée est alors cuite à une température ne dépassant pas 1 000 °C.

On fritte enfin la pièce sous atmosphère d'argon à une température d'environ 2 100 °C pendant 30 minutes.

On obtient une pièce frittée de densité égale ou supérieure à 3,05 g/cm³, soit 95 % de la densité théorique, et de grosseur moyenne de grain d'environ 5 micromètres. Une telle pièce présente des propriétés mécaniques et chimiques permettant son emploi dans des applications à haute température, telles que comme élément de turbines à gaz ou de moteurs Diesel.

## Revendications

1. Procédé de fabrication de pièces en carbure de silicium dense par frittage sans pression, dans lequel

a) on soumet une poudre de carbure de silicium, au moins en majeure partie de la forme cristalline alpha, de surface spécifique au moins égale à 2 m²/g, à un traitement thermique sous vide de purification à une température supérieure à 1 200 °C,

b) on mélange la poudre purifiée à un nitrure contenant de l'aluminium, ainsi qu'à du bore ou un composé contenant du bore, en quantité correspondant à moins de 0,15 % en poids de bore, rapportés au poids de carbure de silicium, le nitrure et le bore ou le composé contenant du bore étant également à l'état pulvérulent,

c) on met en suspension le mélange pulvérulent dans un solvant organique volatil, et le soumet à un broyage,

d) on élimine les impuretés métalliques provenant du broyeur par un traitement par un acide dilué,

e) on ajoute au mélange pulvérulent une matière organique carbonisable susceptible de former par sa carbonisation pendant le frittage de 0,2 à 4 % en poids de carbone amorphe, rapportés au poids de carbure de silicium,

f) on forme une pièce moulée à partir du mélange pulvérulent et de la matière organique carbonisable,

g) on soumet la pièce moulée au frittage sous atmosphère neutre à une température comprise entre 1 900° et 2 250 °C, caractérisé en ce que le nitrure contenant de l'aluminium est le produit obtenu par nitruration d'un mélange de poudres de silicium et d'aluminium.

2. Procédé selon la revendication 1, caractérisé en ce que la quantité de nitrure contenant de l'aluminium est d'environ 0,5 à 5 % en poids, rapportés au poids de carbure de silicium.

3. Procédé selon les revendications 1 ou 2, caractérisé en ce que la quantité de bore est inférieure à 0,03 % en poids.

4. Procédé selon l'une des revendications 1 à 3, caractérisé en ce que l'on forme la pièce moulée par pressage dans une matrice sous pression élevée, par pressage isostatique, par coulée en barbotine ou par électrophorèse.

5. Procédé selon l'une des revendications 1 à 3, caractérisé en ce que l'on forme la pièce moulée par injection, par filage ou par pressage thermoplastique, après addition d'un liant, d'un plastifiant et d'un lubrifiant.

6. Procédé selon l'une des revendications 1 à 5, caractérisé en ce que la température de frittage est d'environ 2 100 °C.

## Claims

1. A method of producing dense silicon carbide articles by sintering without pressure, in which

a) a silicon carbide powder which is at least in major part of the crystalline alpha form, having a specific surface equal to at least $2 m^2/g$, is submitted to a purifying heat treatment under vacuum at a temperature higher than 1 200 °C,

b) the purified powder is mixed to a nitride which contains aluminium as well as to boron or a compound containing boron, in a quantity corresponding to less than 0,15 % by weight of boron as compared with the weight of silicon, the nitride and the boron or the compound which contains boron being equally in the powder state,

c) the powdery mixture is suspended in a volatile organic solvent and is submitted to a crushing,

d) the metal impurities coming from the crushing are eliminated by a diluted acid,

e) a carbonisable organic material which produces by its carbonisation during the sintering step 0,2 to 4 % by weight of amorphous carbon compared to the weight of silicon carbide is added to the powdery mixture,

f) a moulded article is formed from the powdery mixture and the carbonisable organic material,

g) the moulded article is submitted to sintering under neutral atmosphere at a temperature lying between 1 900 and 2 250 °C, characterized in that the nitride which contains aluminium is the product obtained by nitriding a mixture of silicon and aluminium powders.

2. A method according to claim 1, characterized in that the quantity of nitride which contains aluminium lies between about 0,5 to 5 % by weight compared with the weight of silicon carbide.

3. A method according to claims 1 or 2, characterized in that the quantity of boron lies below 0,03 % by weight.

4. A method according to one of the claims 1 to 3, characterized in that the moulded article is formed by pressing in a matrix under high pressure, by isostatic compression, by moulding in a crucible or by electrophoresis.

5. A method according to one of claims 1 to 3, characterised in that the moulded article is formed by injection, by spinning or by thermoplastic pressing, after adding a binder, a plastifier and a lubricant.

6. A method according to one of claims 1 to 5, characterized in that the sintering temperature is about 2 100 °C.

## Ansprüche

1. Verfahren zur Herstellung von Formkörpern aus dichtem Siliciumcarbid durch Sintern ohne Druck, wobei

a) man ein Siliciumcarbidpulver, mit mindestens größtenteils kristalliner Alpha-Form, einer spezifischen Oberfläche von mindestens gleich $2 m^2/g$, einer Wärmebehandlung unter Vakuum zur Reinigung bei einer Temperatur oberhalb 1 200 °C unterwirft,

b) man das gereinigte Pulver mit einem Aluminium enthaltenden Nitrid und mit Bor oder einer Bor enthaltenden Verbindung in einer Menge, die mindestens 0,15 Gew.% Bor in bezug auf das Gewicht des Siliciumcarbids entspricht, mischt, wobei das Nitrid und das Bor oder die Bor enthaltende Verbindung ebenfalls in pulverförmigem Zustand sind,

c) man die pulverförmige Mischung in einem flüchtigen organischen Lösungsmittel suspendiert und einer Zerkleinerung unterwirft,

d) man die vom Zerkleinerer kommenden metalischen Unreinheiten durch eine Behandlung mit einer verdünnten Säure entfernt,

e) man der pulverförmigen Mischung ein verkohlbares organisches Material zusetzt, das durch seine verkohlung während des Sinterns 0,2 bis 4 Gew.% amorphen Kohlenstoffs, in bezug auf das Gewicht des Siliciumcarbids, bildet,

f) man ein Gußstück ausgehend von der pulverförmigen Mischung und dem verkohlbaren organischen Material bildet,

g) man das Gußstück einer Sinterung unter neutraler Atmosphäre bei einer temperatur zwischen 1 900 und 2 250 °C unterwirft, dadurch gekennzeichnet, daß das Aluminium enthaltende Nitrid das Produkt ist, das durch Nitrierung einer Mischung von Silicium- und Aluminiumpulver erhalten wird.

2. Verfahren nach Anspruch 1, dadurch gekennzeichnet, daß die Menge des Aluminium enthaltenden Nitrids zwischen etwa 0,5 und 5 Gew.% in bezug auf das Gewicht des Siliciumcarbids beträgt.

3. Verfahren nach den Ansprüchen 1 oder 2, dadurch gekennzeichnet, daß die Menge an Bor geringer ist als 0,03 Gew.%.

4. Verfahren nach einem der Ansprüche 1 bis 3, dadurch gekennzeichnet, daß man das Gußstück durch Pressen in einer Matrix unter hohem Druck, durch isostatisches Pressen, durch Gießen in einem Tiegel oder durch Elektrophorese bildet.

5. Verfahren nach einem der Ansprüche 1 bis 3, dadurch gekennzeichnet, daß man das Gußstück durch Injektion, durch Spinnen oder durch thermoplastisches Pressen nach Hinzufügen eines Bidenmittels, eines Weichmachers und eines Schmiermittels bildet.

6. Verfahren nach einem der Ansprüche 1 bis 5, dadurch gekennzeichnet, daß die Sintertemperatur etwa 2 100 °C beträgt.